# EUROPÄISCHE PATENTSCHRIFT

(11) **EP 3 268 604 B1**
(45) Veröffentlichungstag und Bekanntmachung des Hinweises auf die Patenterteilung: **17.06.2020**
(21) Anmeldenummer: 16708607.3
(22) Anmeldetag: 08.03.2016
(51) Int. Cl.: F03D 1/06, F03D 80/70

(54) **VERSTELLEINHEIT ZUR PITCHVERSTELLUNG EINES ROTORBLATTS UND WINDKRAFTANLAGE MIT EINER SOLCHEN VERSTELLEINHEIT**
CONTROL UNIT FOR CONTROLLING THE PITCH OF A ROTOR BLADE, AND A WIND TURBINE COMPRISING SUCH A CONTROL UNIT
UNITÉ DE RÉGLAGE POUR RÉGLER LE PAS D'UNE PALE DE ROTOR ET ÉOLIENNE COMPRENANT UNE TELLE UNITÉ DE RÉGLAGE

(30) Priorität: 11.03.2015 DE 202015001902 U
(43) Veröffentlichungstag der Anmeldung: 17.01.2018
(73) Patentinhaber: Liebherr-Components Biberach GmbH, 88400 Biberach an der Riß (DE)
(72) Erfinder: GAILE, Anton, 88299 Leutkirch (DE); FESENMAYR, Jan, 88299 Leutkirch (DE); CERSOWSKY, Stefan, 89551 Königsbronn (DE); SCHULZE, Thomas, 88400 Biberach an der Riss (DE)
(74) Vertreter: Thoma, Michael
(86) Internationale Anmeldenummer: PCT/EP2016/000409
(87) Internationale Veröffentlichungsnummer: WO 2016/142055

(56) Entgegenhaltungen:
- WO-A1-2008/068373
- WO-A1-2012/069062
- KR-B1- 100 987 760
- US-A1- 2008 292 462
- US-A1- 2012 063 901
- US-A1- 2014 328 679

## Beschreibung

Die vorliegende Erfindung betrifft allgemein Windkraftanlagen mit verstellbaren Rotorblättern, deren Pitchwinkel einstellbar ist. Die Erfindung betrifft dabei insbesondere eine Verstelleinheit zum Verstellen des Pitchwinkels eines Windkraftanlagen-Rotorblatts, mit einem Drehlager umfassend zumindest zwei koaxiale, zueinander verdrehbare Lagerringe, zumindest einem Stellaktor zum Verdrehen der beiden Lagerringe zueinander sowie einer Versorgungseinheit zum Energieversorgen des Stellaktors, wobei der zumindest eine Stellaktor und die Versorgungseinheit auf gegenüberliegenden Seiten eines vorzugsweise platten- oder tellerförmigen Stellantrieb-Trägerteils angeordnet sind, das mit einem der Lagerringe direkt oder indirekt drehfest verbunden ist und ein drehbares Abstützlager zum drehbaren Abstützen des Stellaktors an dem Trägerteil aufweist.

Bei modernen Windkraftanlagen können die Rotorblätter in ihrem Anstellwinkel verstellt werden, um die Anströmverhältnisse an den Rotorblättern und das von den Rotorblättern erzeugte Drehmoment an verschiedene Betriebsbedingungen wie Ausschalten der Anlage und insbesondere verschiedene Windstärken und - verhältnisse anpassen zu können. Hierzu sind die Rotorblätter üblicherweise mittels Großwälzlagern oder auch Gleitlagern um ihre Längsachse drehbar an der Rotornabe gelagert, sodass die Rotorblätter um ihre Blattlängsachsen gegenüber der Rotornabe verdreht und damit der Anstellwinkel der Rotorblätter verändert werden kann. Die Verstelleinheit zum Verstellen des genannten Anstell- oder Pitchwinkels eines Rotorblatts umfasst dabei üblicherweise einen Stellantrieb, der im Bereich des Drehlagers zwischen Rotornabe und Rotorblatt angeordnet ist und die beiden Lagerringe des Drehlagers mittels zumindest einem, vorzugsweise linear arbeitenden Stellaktor zueinander verdreht, sei es durch direktes Angreifen an den Lagerringen oder indirekt an damit verbundenen Bauteilen wie beispielsweise der Rotornabe oder dem Rotorblatt selbst oder damit verbundenen Strukturteilen wie beispielsweise die Lagerringen aussteifenden Versteifungsplatten.

Aus der Schrift WO 2012/069062 A1 ist eine Windkraftanlage bekannt, bei der die Verstelleinheit zur Pitchverstellung der Rotorblätter für jedes Rotorblatt ein Paar Hydraulikzylinder sowie eine zugehörige Versorgungseinheit mit Druckspeichern und Steuerungsventilen umfasst, die auf einer Trägerplatte montiert sind, die den Innenring des Drehlagers verschließt und mit dem Innenring zusammen an der Rotornabe drehfest fixiert ist. Dabei ist die genannte Versorgungseinheit mit Druckspeichern und Steuerungsventilen auf der Innenseite, das heißt der der Rotornabe zugewandten Seite der genannten Trägerplatte befestigt, während das Hydraulikzylinderpaar auf der Außenseite der Trägerplatte angeordnet ist und dort einerseits an der Trägerplatte abgestützt und andererseits an einem mit dem Außenring des Drehlagers verbundenen Strukturteil abgestützt ist, sodass durch Ein- und Ausfahren der Hydraulikzylinder der Außenring gegenüber dem Innenring verdreht und damit der Pitchwinkel des Rotorblatts verstellt werden kann.

Ähnliche Pitch-Verstellsysteme für die Rotorblätter von Windkraftanlagen sind aus den Schriften EP 2458209 A2, AU 2009/337882 A1 , US 2012/063901 A1, WO 2008/068373 A1, DK 2013 00717 A, US 2010/232964 A1 oder WO 2014/009011 A2 bekannt.

Ein solcher Verstellantrieb zeichnet sich durch seine kompakte Bauweise aus, da durch die Aufteilung von Stellaktor und Versorgungseinheit auf unterschiedliche Seiten der Trägerplatte eine Anordnung in dem von den Lagerringen umschlossenen Innenraum erzielt werden kann. Zudem lässt sich der Verstellantrieb zusammen mit dem Drehlager zu einer vormontierbaren Baugruppe zusammenfassen, die nicht erst in luftiger Höhe an der Rotornabe zusammengebaut werden muss und hinsichtlich ihrer Funktionsfähigkeit schon vorab geprüft werden kann.

Allerdings ergibt sich durch die Aufteilung von Versorgungseinheit und Stellaktoren auf gegenüberliegende Trägerplattenseiten die Problematik, dass die Trägerplatte relativ große Durchgangsausnehmungen für die Versorgungsleitungen aufweisen muss, wodurch die Festigkeit der Trägerplatte und damit deren aussteifende Wirkung für den Lagerring leidet. Diese Problematik verschärft sich noch dadurch, dass sich die Stellaktoren bei der Pitchverstellung gegenüber der Trägerplatte und damit der Verstelleinheit verdrehen, sodass die Durchtrittsöffnungen für die Versorgungsleitungen ausreichend groß sein müssen, um den Drehversatz kompensieren zu können. Zum anderen kann es hierdurch zu einer Kollisionproblematik kommen, insbesondere wenn bei größeren Rotorblättern und damit größeren zu beherrschenden Kräften mehrere Stellaktoren zum Verstellen eines Rotorblatts vorgesehen sind.

Der vorliegenden Erfindung liegt hiervon ausgehend die Aufgabe zugrunde, eine verbesserte Windkraftanlage und eine verbesserte Verstelleinheit zum Verstellen insbesondere des Pitchwinkels eines Rotorblatts zu schaffen, die Nachteile des Standes der Technik vermeiden und Letzteren in vorteilhafter Weise weiterbilden. Insbesondere soll eine kleinbauende und kompakte Verstelleinheit geschaffen werden, die die Drehlagerstruktur und dessen Aussteifung möglichst wenig schwächt und die sich beim Verdrehen der Lagerteile ergebende Kollisionproblematik möglichst umgeht.

Erfindungsgemäß wird die genannte Aufgabe durch eine Windkraftanlage gemäß Anspruch 10 sowie eine Verstelleinheit gemäß Anspruch 1 gelöst. Bevorzugte Ausgestaltungen der Erfindung sind Gegenstand der abhängigen Ansprüche.

Es wird also vorgeschlagen, die energieversorgende Verbindung von der Versorgungseinheit zu dem zumindest einen Stellaktor in das drehbare Abstützlager zu integrieren, durch das der Stellaktor an dem Stellantriebs-Trägerteil und damit einem der Lagerringe abgestützt ist. Erfindungsgemäß ist die Versorgungseinheit mit dem Stellantrieb durch zumindest einen Druckmittelkanal, der durch das Abstützlager hindurch geführt ist, verbunden. Das Abstützlager besitzt also eine Doppelfunktion und bildet einerseits den drehbaren Anlenkpunkt für den Stellaktor und andererseits die Energiedurchführung, die den Stellaktor von der Versorgungseinheit her mit Energie versorgt. Hierdurch kann auf separate Durchtrittsausnehmungen zur Kabel- und Schlauchdurchführung im Trägerteil verzichtet und damit eine entsprechende Schwächung des Trägerteils vermieden werden.

In vorteilhafter Weiterbildung der Erfindung kann die Verbindung zwischen Versorgungseinheit und Stellaktor gänzlich schlauch- und kabelfrei ausgebildet sein. Die Energieversorgungsverbindung und eine ggfs. auch notwendige Steuerungsverbindung zwischen Versorgungseinheit und Stellaktor können in das genannte drehbare Abstützlage integriert sein und ausschließlich durch das genannte Abstützlager hindurchgeführt sein. Ein Lagerstrukturteil wie bspw. ein Lagerbolzen kann zumindest eine Energieversorgungsbohrung zum Energieversorgen des Stellaktors aufweisen. Durch die Beseitigung separater Schlauch- und Kabelverbindungen, die durch separate Durchtrittsausnehmungen am Abstützlager vorbei geführt werden müssten, kann nicht nur eine Schwächung des Trägerteils vermieden, sondern auch die eingangs genannte Kollisionsproblematik beim Verdrehen der Lagerringe zueinander und dem auftretenden Verschwenken der Stellaktoren beseitigt werden, da keine ausbauchenden Kabel oder Schläuche an Lagerstrukturteilen anstehen. Der zumindest eine Stellaktor kann ggf. an seiner Aussenseite durchaus Druckmittelrohre bzw. -leitungen aufweisen, bspw. in Form aussenliegender Hydraulikrohren, vorzugsweise jedoch sind keine Schläuche oder Kabel vorhanden, die über das den Stellantrieb tragende Trägerteil hinweggeführt sind.

In einer nicht beanspruchten Ausführung kann nicht nur der zumindest eine Stellaktor, sondern auch die Versorgungseinheit gegenüber dem Trägerteil, an dem der Stellaktor drehbar abgestützt ist, drehbar gelagert sein, sodass sich bei einer Pitchverstellung des Rotorblatts und damit bei einem Verdrehen der Lagerringe zueinander sowohl der zumindest eine Stellaktor als auch dessen Versorgungseinheit gegenüber dem Stellantriebs-Trägerteil verdrehen bzw. schwenken können. Die drehbare Lagerung der Versorgungseinheit kann hierbei insbesondere mit der drehbaren Abstützung bzw. Lagerung des zumindest einen Stellaktors zusammengefasst sein, sodass sich die Versorgungseinheit und der Stellaktor zusammen gegenüber dem Trägerteil verdrehen können, insbesondere derart, dass es zu keiner Verdrehung zwischen Versorgungseinheit und Stellaktor kommt, sondern nur zu einer gemeinsamen Verdrehung gegenüber dem Trägerteil. Durch den fehlenden Drehversatz zwischen Versorgungseinheit und Stellaktor kann die energieversorgende Verbindung zwischen Versorgungseinheit und Stellaktor besonders einfach ausgebildet sein.

Beispielsweise kann ein durch das Trägerteil hindurchtretender Lagerzapfen vorgesehen sein, an dem sich einerseits der Stellaktor abstützt und an dem andererseits die Versorgungseinheit befestigt ist, wobei der genannte Lagerzapfen zumindest einen Druckmittelkanal umfassen kann, um die Versorgungseinheit mit dem Stellaktor energieversorgend zu verbinden. Der genannte Lagerzapfen kann hierbei drehbar an dem Trägerteil gelagert sein, beispielsweise durch ein geeignetes Wälzlager und/oder zumindest ein geeignetes Gleitlager. Die Komponenten der Versorgungseinheit wie Pumpe, Elektromotor und Druckspeicher können zu einer vormontierten Baugruppe zusammengefasst sein, die als Einheit an den Lagerzapfen montiert wird.

Ein solcher Lagerzapfen kann ggfs. auch als Hülse oder in anderer Weise als Lagerstrukturteil ausgebildet sein, an dem einerseits der Stellaktor und andererseits die Versorgungseinheit abgestützt sein kann.

Eine solche gemeinsame Drehbarkeit von Stellaktor und Versorgungseinheit gegenüber dem Stellantriebs-Trägerteil kann insbesondere dann von Vorteil sein, wenn nur ein einziger Stellaktor zum Pitchverstellen des Rotorblatts bzw. zum Verdrehen der Lagerringe zueinander vorgesehen ist, oder wenn für mehrere Stellaktoren zum Pitchverstellen eines Rotorblatts jeweils separate Versorgungseinheiten vorgesehen sind. Letztere Ausbildung kann beispielsweise dadurch realisiert sein, dass jedem Stellaktor eine Versorgungseinheit beispielsweise in Form eines Druckspeichers und/oder einer antreibbaren Pumpe zugeordnet ist, die in der vorgenannten Weise jeweils an dem Lagerzapfen oder Lagerstrukturteil befestigt werden kann, an dem auch der zugehörige Stellaktor abgestützt ist.

In alternativer Weiterbildung der Erfindung kann jedoch auch eine gemeinsame Versorgungseinheit für mehrere Stellaktoren vorgesehen sein, wobei in diesem Fall vorteilhafterweise eine drehfeste Lagerung der Versorgungseinheit an dem Trägerteil vorgesehen sein kann. Um dennoch eine Energieversorgung durch die drehbaren Abstützlager der Stellaktoren an dem Trägerteil realisieren zu können, weisen die genannten drehbaren Abstützlager Drehdurchführungen zum Hindurchführen von Druckmittel auf. Eine solche Drehdurchführung kann dabei in jedes Abstützlager integriert werden, sodass für jeden Stellaktor eine separate Drehdurchführung zur Energieversorgung vorgesehen ist. In alternativer Weiterbildung der Erfindung kann ggfs. auch nur eines der Abstützlager mit einer solchen Drehdurchführung versehen sein, wobei durch einen geeigneten Verteiler auf der Aktorseite des Trägerteils eine Verteilung des durch die Drehdurchführung hindurchgeführten Druckmittels an die verschiedenen Stellaktoren erfolgen kann, wobei hier eine sternförmige Verteilung an die Stellaktoren oder auch eine serielle Verteilung durch Hintereinanderschaltung der Stellaktoren vorgesehen sein kann.

Die Stellaktoren können dabei hydraulisch parallelgeschaltet angeordnet oder auch seriell im Sinne einer Master-Slave-Anordnung von der Versorgungseinheit her gespeist werden.

Sind in der genannten Weise zumindest zwei Stellaktoren vorgesehen, können diese zueinander gegenläufig angeordnet sein derart, dass zum Verdrehen der beiden Lagerringe zueinander einer der Stellaktoren ausfahrbar und ein anderer der Stellaktoren einfahrbar ist. Hierdurch kann ein Pendelvolumen vermieden und ein Druckspeicher deutlich kleiner ausgebildet werden.

Alternativ oder zusätzlich können aber auch zumindest zwei Stellaktoren vorgesehen sein, die miteinander gleichsinnig arbeitend angeordnet sind derart, dass zum Verdrehen der beiden Lagerringe zueinander beide Stellaktoren gleichzeitig ausfahrbar und/oder beide Stellaktoren gleichzeitig einfahrbar sind.

Das genannte Stellantrieb-Trägerteil, an dem sich der zumindest eine Stellaktor abstützt bzw. die mehreren Stellaktoren absützen und die Versorgungseinheit gelagert ist, kann in Weiterbildung der Erfindung im Wesentlichen platten- oder tellerförmig ausgebildet sein und/oder eine Erstreckung im Wesentlichen. quer zur Drehachse des Drehlagers besitzen und/oder sich nach Art eines Deckels über einen der Lagerringe erstrecken. Insbesondere kann sich das genannte Trägerteil über eine Lagermitte hinwegerstrecken und/oder mit mehreren, insbesondere auch gegenüberliegenden Lagerringabschnitten verbunden sein, wobei bei einer scheiben- oder tellerförmigen Trägerteilausbildung eine umlaufende bzw. mehrfache Anbindung an den Lagerring vorgesehen sein kann. Das Trägerteil kann dabei eine flächige, zumindest näherungsweise geschlossene Plattenstruktur besitzen und/oder den Lagering im wesentlichen vollständig oder zumindest überwiegend verschliessen, aber auch als Fachwerk oder Gitterstruktur ausgebildet sein oder auch nur aus Streben bestehen. Vorteilhafterweise bildet das genannte Trägerteil ein Versteifungselement, welches einen Lagerring und/oder eine Lagerausnehmung der Rotornabe gegen Verwindungen versteift, wobei das genannte Trägerteil vorteilhafterweise starr an einem der Lagerringe und/oder der Lagerausnehmung der Rotornabe befestigt sein kann, beispielsweise durch mehrere Schraubbolzen.

Der zumindest eine Stellaktor, der sich an besagtem Trägerteil abstützt, kann sich andererseits direkt oder indirekt an dem anderen Lagerring abstützen, der gegenüber dem Lagerring, an dem das genannte Trägerteil befestigt ist, verdrehbar ist, sodass durch Ein- und Ausfahren bzw. durch Betätigen des Stellaktors die beiden Lagerringe zueinander verdreht werden können. Die Anlenkung des Stellaktors an dem genannten Lagerring kann vorteilhafterweise mittels eines weiteren drehbaren Abstützlagers erfolgen, das den Stellaktor drehbar an dem Lagerring abstützt. Das genannte Abstützlager kann direkt am Lagerring angebracht oder an einem mit dem Lagerring verbundenen Zwischenteil beispielsweise in Form eines Lagerflansches oder einer Befestigungskonsole verbunden sein.

Vorzugsweise kann die insoweit direkte oder auch indirekte Anlenkung des zumindest einen Stellaktors an dem genannten anderen Lagerring mittel eines Abstützteils erfolgen, das - anders als das vorgenannte Trägerteil, an dem der anderre Anlenkpunkt des Stellaktors vorgesehen ist - die Lagermitte freilässt und mit dem genannte Lagerring nur im Bereich der Anlenkung des Stellaktors verbunden, also insbesondere nicht mit gegenüberliegenden oder verschiedenen Lagerringabschnitten verbunden ist. An dem genannten einseitigen Abstützteil, das als Lagerflansch oder Befestigungskonsole, aber auch als integraler Lagerringabschnitt ausgebildet sein kann, kann ein drehbares oder gelenkiges Abstützlager zum Abstützen des Stellaktors vorgesehen sein. Durch die einseitige, die Lagermitte freilassende Anlenkung des Stellaktors an dem genannten anderen Lagerring kann einerseits eine gute Zugänglichkeit zu dem zumindest einen Stellaktor, andererseits aber auch eine günstige, direkte Krafteinleitung in den Lagerring erzielt werden. Zudem wird für den Stellaktor ein möglichst langer Stellweg geschaffen, der einen weiten Verstellbereich ohne Kollisionsprobleme sicherstellt, erzielt.

In alternativer Weiterbildung kann aber auch vorgesehen sein, dass mit dem genannten weiteren Lagerring ein weiteres Trägerteil drehfest verbunden ist, an dem der genannte Stellaktor angreift. Dieses weitere Trägerteil kann in der vorgenannten Weise platten- oder tellerförmig ausgebildet sein oder eine andere Struktur besitzen und/oder ein Versteifungsteil bilden, das nach Art eines Deckels an dem genannten Lagerring befestigt oder auch mit dem Rotorblatt im Bereich von dessen Lagerausnehmung befestigt sein kann.

Die vorgenannte Befestigung des Stellaktors direkt oder indirekt am Lagerring erlaubt jedoch eine platzgünstige Unterbringung des zumindest einen Stellaktors und gibt diesem einen ausreichenden Stellweg. Zudem kann eine direkte Kraftübertragung mit leichter Bauweise erzielt werden.

In Weiterbildung der Erfindung kann der Außenring des Drehlagers mit der Rotornabe und der Innenring mit dem Rotorblatt verbunden sein. Grundsätzlich wäre auch eine umgekehrte Anordnung der Lagerringe denkbar. Eine Verbindung des Innenrings mit dem Rotorblatt erleichtert allerdings dessen Montage an die Rotornabe bzw. das daran angebrachte Pitchlager.

Das Trägerteil, an dem der zumindest eine Stellaktor und dessen Versorgungseinheit gelagert sind, kann in vorteilhafter Weise mit dem Außenring verbunden sein und/oder mit der Rotornabe verbunden sein, insbesondere in drehfester Weise, wobei sich der zumindest eine Stellaktor in diesem Falle dann mit seinem zweiten Anlenkpunkt an dem Innenring des Drehlagers abstützt. In alternativer Weiterbildung der Erfindung kann jedoch auch das genannte Trägerteil mit dem Innenring drehfest verbunden sein, wobei sich der zumindest eine Drehaktor in diesem Fall dann an dem Außenring abstützt.

In Weiterbildung der Erfindung kann das Abstützlager zum Abstützen des zumindest einen Stellaktors alternativ oder zusätzlich zu der genannten Energieversorgungsdurchführung auch eine Signaldurchführung aufweisen, insbesondee in Form einer Signalleitung, die ein an den Stellaktoren vorgesehenes Stellweg- und/oder Stellwinkelmessystem mit der Versorgungseinheit bzw. einem damit verbundenen Steuerbaustein auf der anderen Seite des Trägerteils verbindet. Das Abstützlager kann insofern eine Dreifachfunktionalität aufweisen, die neben der drehbaren Anlenkung für den Stellaktor und der Energiedurchführung auch noch eine Signalübermittlung vorsieht.

Insbesondere kann das genannte Wegmesssystem zum Erfassen von Stellbewegungen des zumindest einen Stellaktors und/oder davon erzeugter Drehbewegungen einen in das Abstützlager integrierten Winkelsensor und/oder einen in den Stellaktor integrierten linearen Wegmesssensor umfassen, wobei eine Signalleitung von dem Winkelsensor und/oder dem Wegmesssensor zu der an der Versorgungseinheit angeordneten Steuervorrichtung durch das Abstützlager hindurchgeführt ist, beispielsweise mittels Schleifkontakten oder einer geigneten Signalleitung.

Die Erfindung wird nachfolgend anhand bevorzugter Ausführungsbeispiele und zugehöriger Zeichnungen näher erläutert. In den Zeichnungen zeigen:
- Fig. 1:: Eine schematische, perspektivische Darstellung einer Windkraftanlage mit pitchverstellbaren Rotorblättern gemäß einer vorteilhaften Ausführung der Erfindung,
- Fig. 2:: Eine perspektivische, schematische Darstellung des Drehlagers und des darin integrierten Verstellantriebs zum Verdrehen der beiden Lagerringe zueinander,
- Fig. 3:: Eine Draufsicht auf das Drehlager und die zugeordneten Stellaktoren aus Fig. 2,
- Fig. 4:: Eine Draufsicht auf die Versorgungseinheit des Verstellantriebs, die auf der den Stellaktoren gegenüberliegenden Seite des plattenförmigen Trägerteils angeordnet ist,
- Fig. 5:: Eine Draufsicht auf ein Drehlager und die dort angeordneten Stellaktoren ähnlich Fig. 2, wobei die Stellaktoren zueinander gegenläufig arbeitend angeordnet sind,
- Fig. 6:: Eine Draufsicht auf ein Drehlager ähnlich Fig. 3 und Fig. 5, wobei der Stellantrieb in dieser Ausführung nur einen Stellaktor umfasst und die Versorgungseinheit zusammen mit dem Stellaktor verdrehbar an dem plattenförmigenTrägerteil gelagert ist,
- Fig. 7:: Eine schematische Schnittansicht eines drehbar gelagerten Lagerzapfens zum Abstützen des Stellaktors aus Fig. 6 an dem Trägerteil, wobei die Schnittansicht die Hydraulikkanäle zur Druckmittelversorgung des Stellaktors durch den Lagerzapfen zeigt, und
- Fig. 8:: Eine schematische Schnittansicht eines Lagerzapfens und der darin integrierten hydraulischen Drehdurchführung mit den darin ausgebildeten Hydraulikkanälen, die ein Verdrehen der Versorgungseinheit gegenüber dem Stellaktor erlaubt.

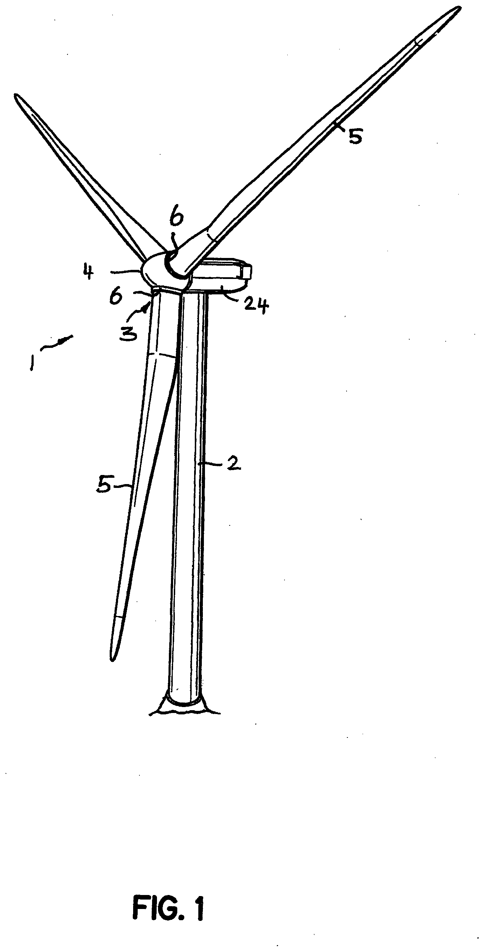

Wie Fig. 1 zeigt, kann der Rotor 3 der Windkraftanlage 1 um eine liegende Rotorachse drehbar an einer Gondel 24 gelagert sein, die auf einem Turm 2 angeordnet und um eine aufrechte Achse verdreht werden kann, um den Rotor 3 zur Windrichtung ausrichten zu können. In der genannten Gondel 24 können in an sich bekannter Weise die Steuerungsaggregate, der Generator und zusätzliche Energiewandler- und Hilfsaggregate untergebracht sein.

Die an der Gondel 24 um die liegende Rotorachse drehbar gelagerte Rotornabe 4 trägt mehrere Rotorblätter 5, die an der Rotornabe 4 um Rotorblattlängsachsen drehbar gelagert sind, sodass der Anstellwinkel der Rotorblätter 5 an die Betriebsbedingungen, insbesondere die Windstärke und den Einschaltstatus der Windkraftanlage anpassbar ist. Die Rotorblätter 5 sind hierzu jeweils mittels eines sogenannten Pitchlagers in Form eines Drehlagers 6 an der Rotornabe 4 gelagert, vgl. Fig. 1.

Die genannten Pitch- bzw. Drehlager 6 umfassen dabei jeweils zumindest zwei zueinander verdrehbare, koaxiale Lagerringe 7 und 8, deren Drehachse sich etwa parallel zur jeweiligen Rotorblattlängsachse und/oder radial zur Rotordrehachse erstreckt. Das genannte Drehlager 6 kann hierbei grundsätzlich verschieden ausgebildet sein, insbesondere in Form eines Wälzlagers, bei dem die genannten Lagerringe 7 und 8 durch geeignete Wälzkörper, beispielsweise in Form von mehreren Achsial- und Radiallagerreihen abgestützt sein können. Dabei kann der äußere Lagerring 8 starr an der Rotornabe 4 befestigt sein und der dazu drehbare innere Lagerring 7 das jeweilige Rotorblatt 5 tragen bzw. mit dem genannten Rotorblatt 5 starr verbunden sein, wobei jedoch auch eine umgekehrte Anordnung, das heißt der Innenring 7 an der Nabe 4 befestigt und der Außenring 8 am Rotorblatt 5 befestigt sein könnte.

Um den Pitchwinkel des jeweiligen Rotorblatts 5 in der gewünschten Weise einstellen zu können, ist den Lagerringen 7 und 8 eine Verstelleinheit 10 zugeordnet, die vorteilhafterweise im Wesentlichen vollständig in dem von dem Lagerringen 7 und 8 umschlossenen Innenraum angeordnet sein kann und die beiden Lagerringe 7 und 8 zueinander verdrehen kann.

Die genannte Verstelleinheit 10 kann hierbei elektrohydraulisch ausgebildet sein, wobei zumindest ein vorzugsweise linearer Stellaktor 11 von einer Versorgungseinheit 12 her mit Druckmittel versorgt werden kann, um den Stellaktor 11 zu betätigen. Die genannte Versorgungseinheit 12 kann hierbei eine von einem Elektromotor 15 antreibbare Pumpe 14 umfassen, um ein geeignetes Druckmittel wie beispielsweise Hydrauliköl druckzubeaufschlagen. Das druckbeaufschlagte Druckmittel könnte dabei direkt über geeignete Strömungssteuermittel wie Ventile auf den zumindest einen Stellaktor 11 gegeben werden. Vorteilhafterweise kann die Versorgungseinheit 12 aber auch zumindest einen Druckspeicher 13, insbesondere auch zumindest einen Niederdruckspeicher und zumindest einen Hochdruckspeicher, umfassen, der bzw. die von der Pumpe 14 befüll- bzw. -ladbar sind. Von dem zumindest einen Druckspeicher 13 her kann dann der Stellaktor 11 druckbeaufschlagt werden.

Die Druckbeaufschlagung des zumindest einen Stellaktors 11 wird vorteilhafterweise über eine Steuerungseinrichtung gesteuert, die geeignete Strömungssteuereinrichtungen umfasst, beispielsweise ein oder mehrere Ventile 17, die vorteilhafterweise in einem Ventilblock 16 zusammengefasst sein können, an dem die Pumpe 14 und/oder der zumindest eine Druckspeicher 13 angeschlossen sein können. Die Versorgungseinheit 12 kann vorteilhafterweise ein hydraulisch autarkes System bilden, das den bereitzustellenden Hydraulikdruck selbst erzeugt. Die Versorgungseinheit 12 benötigt lediglich einen Stromversorgungsanschluss, um den Elektromotor 15 zum Antreiben der Pumpe 14 mit elektrischem Strom zu versorgen. Auch die notwendigen Steuerungsbausteine, insbesondere Ventilaktoren, die elektromagnetisch ausgebildet sein können, und/oder elektronische Steuerungsbausteine wie Platinen können in die Versorgungseinheit 12 integriert sein.

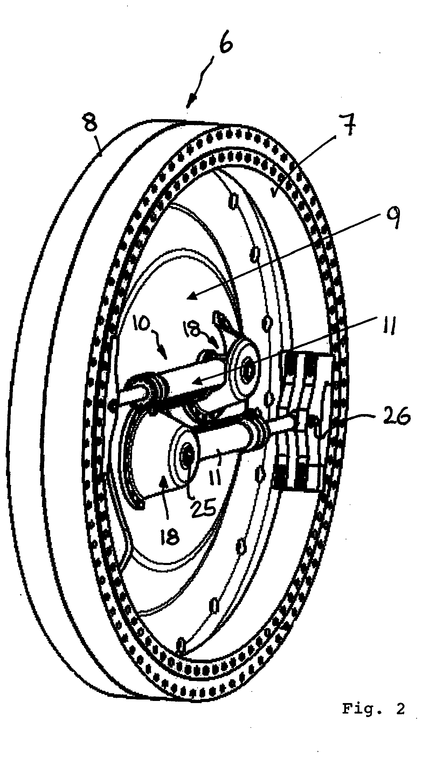

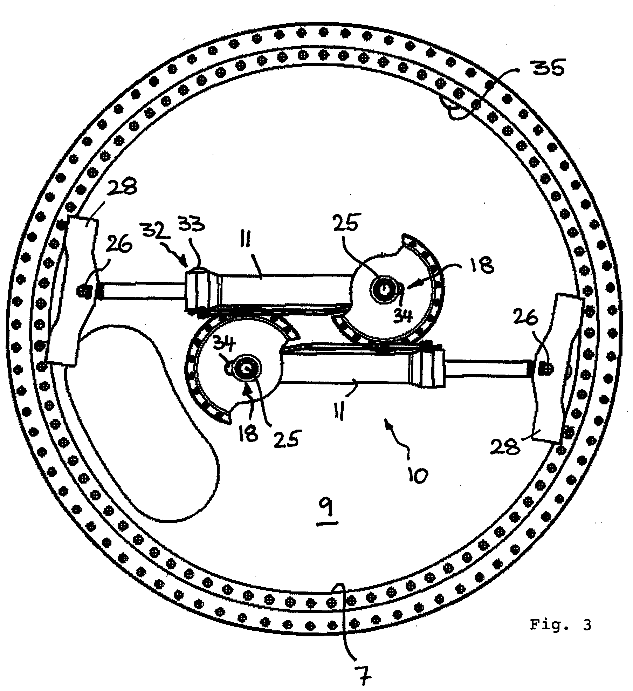

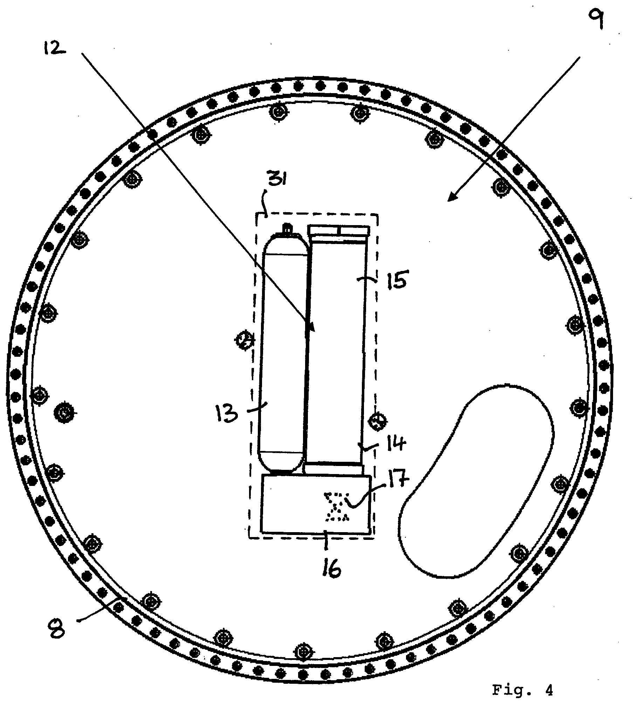

Wie ein Vergleich der Figuren 2 und 3 mit Figur 4 zeigt, sind die Versorgungseinheit 12 einerseits und der zumindest eine Stellaktor 11 andererseits auf unterschiedlichen Seiten eines Trägerteils 9 angeordnet, das platten- oder tellerförmig ausgebildet und sich im Wesentlichen quer zur Drehachse des Drehlagers 6 erstrecken kann. Das genannte Trägerteil 9 kann dabei vorteilhafterweise mit dem Lagerring, der feststehend an der Rotornabe 4 befestigt ist, starr verbunden sein und ein Versteifungselement zum Aussteifen dieses Lagerrings bilden. Das genannte Trägerteil 9 kann dabei beispielsweise eine Art Deckel oder Wand bilden, die den Lagerring 8 im Wesentlichen vollständig verschließen kann, wobei in dem Trägerteil 9 ein Wartungsdurchtrittsloch vorgesehen sein kann, um von der Rotornabe 4 her in das Innere des Rotorblatts 5 zu gelangen, wobei das genannte Wartungsdurchtrittsloch ggfs. auch durch einen Deckel oder eine Tür verschließbar sein kann.

Vorteilhafterweise ist dabei der zumindest eine Stellaktor 11 auf der Rotorblattseite des Trägerteils 9 und die Versorgungseinheit 12 auf der Nabenseite des Trägerteils 9 angeordnet, wobei die Versorgungseinheit 12 und der zumindest eine Stellaktor 11 eine insgesamt flache, längliche Korpuskonfiguration besitzen und mit ihrer Längserstreckungsachse im Wesentlichen quer zur Drehachse des Drehlagers 6 und/oder parallel zur Erstreckung des Trägerteils 9 angeordnet sein können, vgl. Figuren 2 bis 6.

Wie die Figuren 2 und 3 zeigen, können dabei nach einer Ausführung der Erfindung zwei Stellaktoren 11 in Form von Zylindereinheiten vorgesehen sein, die exzentrisch zur Drehachse des Drehlagers 6 angeordnet sind, um die Drehbewegung herbeiführen zu können. Die Stellaktoren 11 besitzen dabei einerseits einen Anlenkpunkt 25 an dem Trägerteil 9 und andererseits einen Anlenkpunkt 26 an dem mit dem Rotorblatt 5 verbundenen Lagerring 7, wobei die genannten Anlenkpunkte 25 und 26 von schwenkbaren oder gelenkigen Abstützlagern gebildet sein können, mittels derer die Stellaktoren 11 unmittelbar oder mittelbar an dem Trägerteil 9 und dem Lagerring 7 abgestützt sind.

Wie Figur 3 zeigt, sind die Stellaktoren 11 dabei jeweils durch ein Abstützlager 18 an dem Trägerteil 9 abgestützt, wobei das genannte Abstützlager 18 gelenkig ausgebildet und/oder drehbar ausgebildet ist und zumindest eine Lagerdrehachse parallel zur Drehachse des Drehlagers 6 aufweist.

Der andere Anlenkpunkt 26 am Lagerring 7 wird vorteilhafterweise ebenfalls von einem Abstützlager gebildet, das in entsprechender Weise gelenkig und/oder drehbar mit zumindest einer Drehachse parallel zur Drehlager-Drehachse ausgebildet sein kann. Die Anlenkung an dem Lagerring 7 kann hierbei durch eine Anlenkkonsole 28 realisiert sein, die starr mit dem Lagerring 7 verbunden ist.

Sind die linearen Stellaktoren 11 als Zylindereinheiten ausgebildet, ist vorteilhafterweise der Zylinder an dem Abstützlager 18 abgestützt, das am Trägerteil 9 vorgesehen ist, um die Hydraulikversorgung, die durch das Abstützlager 18 geführt ist, direkt in den Zylinder führen zu können. Grundsätzlich wäre aber auch eine umgekehrte Anordnung der Stellaktoren 11 denkbar, wobei hier eine Druckfluideinspeisung über die Kolbenstange vorgesehen sein kann.

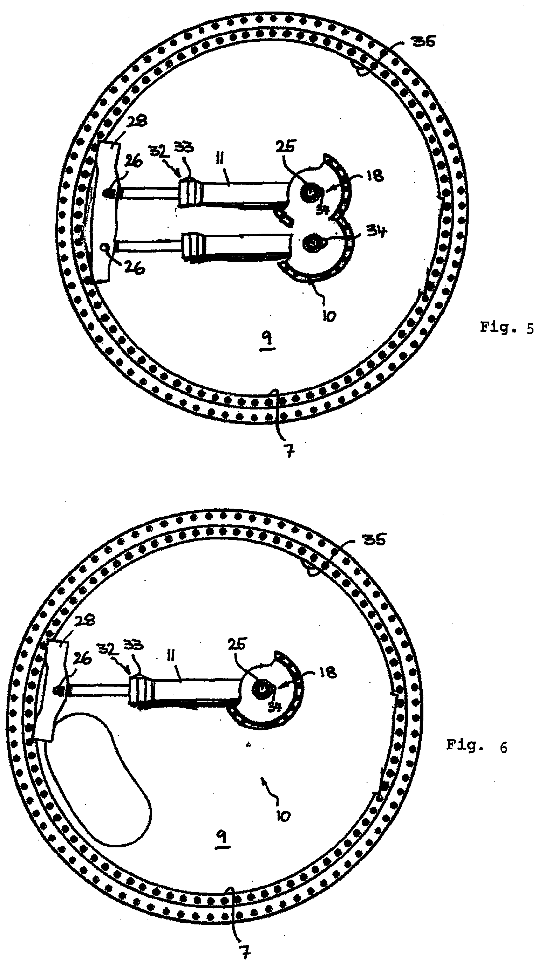

Die mehreren Stellaktoren 11 können miteinander gleichsinnig arbeitend angeordnet sein derart, dass zum Verdrehen der beiden Lagerringe 7 und 8 zueinander beide Stellaktoren 11 gleichzeitig ausfahrbar und/oder beide Stellaktoren 11 gleichzeitig einfahrbar sind, wie dies Fig. 3 zeigt. Wie Fig. 5 zeigt, können aber auch zumindest zwei Stellaktoren 11 vorgesehen sind, die zueinander gegenläufig angeordnet sind derart, dass zum Verdrehen der beiden Lagerringe 7 und 8 zueinander einer der Stellaktoren ausfahrbar und ein anderer der Stellaktoren einfahrbar ist. Wie Fig. 6 zeigt, kann grundsätzlich aber auch nur ein Stellaktor ausreichend sein, insbesondere wenn nur kleinere Rotorblätter verdreht oder allgemein nur kleinere Stellkräfte bzw. Drehmomente zu beherrschen bzw. aufzubringen sind.

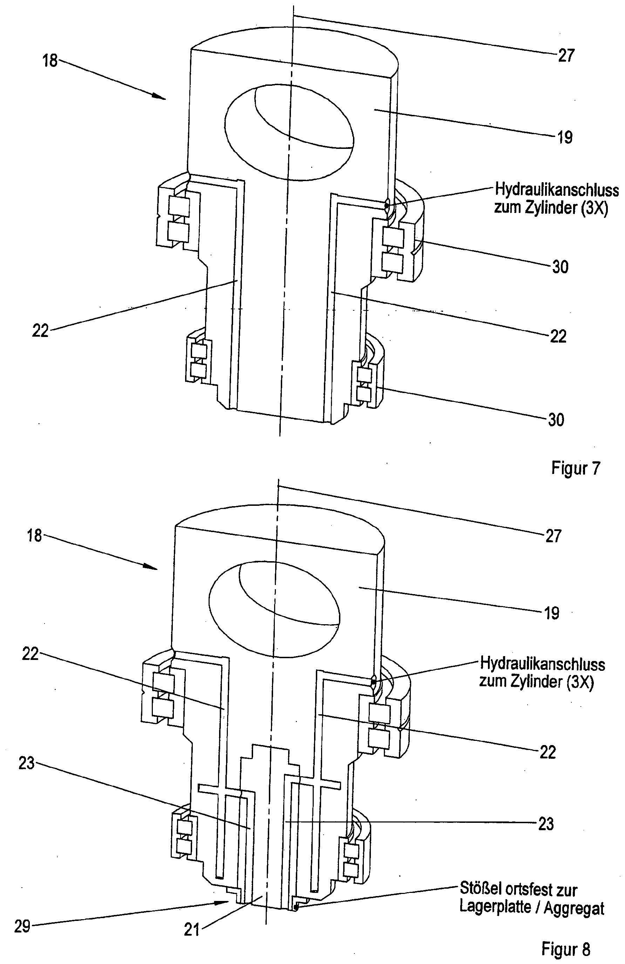

Sind gemäß den Figuren 2 und 3 bzw Fig. 5 mehrere Stellaktoren 11 vorgesehen, kann die Versorgungseinheit 12, wie dies Figur 4 zeigt, starr bzw. drehfest an dem Trägerteil 9 verbunden sein. Um den bei Verstellbewegungen auftretenden Winkelversatz zwischen Verstelleinheit 10 und Stellaktor 11 zu kompensieren, kann das Abstützlager 18 bzw. die darin integrierte Energieversorgung als Drehdurchführung 29 ausgebildet sein, wie dies Fig. 8 zeigt.

Hierbei kann ein den Stellaktor 11 abstützender Lagerzapfen 19, der durch das Trägerteil 9 hindurchgeführt ist, an dem Trägerteil 9 um die vorgenannte Lagerdrehachse 27 drehbar gelagert sein, beispielsweise mittels eines oder mehrerer Drehlager, die als Wälzlager 30 ausgebildet sein und den Lagerzapfen 19 am Trägerteil 9 drehbar abstützen, vgl. Fig. 8. Dabei kann ein Drehteil beispielsweise in Form eines Stößels 21 mit dem Lagerzapfen 19 in verdrehbarem Eingriff stehen und koaxial zu dem genannten Lagerzapfen 19 bzw. dessen Lagerdrehachse 27 angeordnet sein. Beispielsweise kann ein in einer Zapfenbohrung im Inneren des Lagerzapfens 19 aufgenommener, im Wesentlichen zylindrischer Stößel 21 vorgesehen sein, der stirnseitig aus dem Lagerzapfen 19 zur Nabenseite hin vorspringt und gegenüber dem Lagerzapfen 19 verdrehbar ist, sodass der Stößel 21 mit der Versorgungseinheit 12, insbesondere dessen Ventilblock 16 verbunden sein kann. Die genannte Versorgungseinheit 12 kann hierbei starr bzw. drehfest an dem Trägerteil 9 gelagert sein. Durch die Drehdurchführung 29 kann sich der Lagerzapfen 19 gegenüber der drehfest montierten Versorgungseinheit 12 drehen und dennoch Hydraulikfluid zu den Stellaktoren 11 durchleiten.

Wie Fig. 8 zeigt, kommunizieren in dem Drehteil bzw. Stößel 21 vorgesehene Hydraulikkanäle 23 unabhängig von der Verdrehstellung mit Hydraulikkanälen 22 in dem Lagerzapfen 19, sodass die Stellaktoren 11 durch das Abstützlager 18 hindurch mit Druckmittel versorgbar sind.

Besitzt die Verstelleinheit 10 nur einen Stellaktor 11 zum Verdrehen der Lagerringe 7 und 8 zueinander, wie dies Fig. 6 zeigt, kann sich der Stellaktor 11 in an sich analoger Weise jeweils exzentrisch einerseits an dem Trägerteil 9 und andererseits an dem Lagerring 7 mittelbar oder unmittelbar abstützen und entsprechende Anlenkpunkte 25 und 26 aufweisen, die gelenkig bzw. verdrehbar ausgebildet sind.

Das Abstützlager 18 zum Abstützen des Stellaktors 11 am Trägerteil 9 besitzt hierbei ebenfalls eine integrierte Energiedurchführung in Form von Druckmittelkanälen. Wie Fig. 7 im Vergleich zur Fig. 8 zeigt, kann hierbei jedoch auf eine Drehdurchführung verzichtet sein und die Versorgungseinheit 12 unmittelbar an den Lagerzapfen 19 in energieverbindender Weise, insbesondere hydraulisch verbindender Weise angeschlossen sein.

Vorteilhafterweise kann hierbei die Verstelleinheit 10 an dem wiederum drehbar gelagerten Lagerzapfen 19 drehfest befestigt sein, sodass sich die Versorgungseinheit 12 zusammen mit dem Lagerzapfen 19 und damit zusammen mit dem Stellaktor 11 relativ zum Trägerteil 9 verdrehen lässt. Hierdurch treten zwischen der Versorgungseinheit 12 und dem Stellaktor 11 keine Winkelbewegungen oder Verdrehungen auf, sodass die Versorgungseinheit 12 drehfest bzw. starr an dem Lagerzapfen 19 angeordnet werden kann. Der Ventilblock 16 kann dabei unmittelbar an die Hydraulikkanäle 22 in dem Lagerzapfen 19 angeschlossen werden.

Die Versorgungseinheit 12 kann hierzu mit ihren verschiedenen Komponenten wie Druckspeicher 13 und/oder Pumpe 14 und/oder Elektromotor 15 zu einer vormontierten Baugruppe zusammengefasst sein, die als Einheit an dem Lagerzapfen 19 montiert werden kann, beispielsweise mittels eines Montageträgers 31, der als Platte ausgebildet sein kann, vgl. Fig. 4, und einerseits die genannten Komponenten der Versorgungseinheit 12 trägt und andererseits an dem Lagerzapfen 19 befestigt werden kann.

Um die Stellbewegungen des zumindest einen Stellaktors 11 exakt steuern zu können, kann in die Verstelleinheit 10 ein geeignetes Wegmesssystem 32 integriert sein, mittels dessen die von dem Stellaktor 11 erzeugte Stellbewegung und/oder die damit einhergehende Verdrehbewegung der Lagerringe 7 und 8 zueinander erfasst werden kann. Hierdurch kann nach Art einer rückkoppelnden Steuerung und/oder Regelung durch das entsprechende Wegmesssignal überprüft werden, ob ein an den Ventilblock 16 gegebenes Stellsignal eine entsprechende Stellbewegung erzeugt hat oder nachjustiert werden muss.

Wie Fig. 2 zeigt, kann das genannte Wegmesssystem 32 hierbei vorteilhafterweise einen oder mehrere Sensoren umfassen, die in den zumindest einen Stellaktor 11 und/oder in dessen Abstützlager 18 integriert sein können. Insbesondere kann ein linearer Wegmesssensor 33 an dem Stellaktor 11 vorgesehen, insbesondere in dessen Zylindereinheit integriert sein, um direkt die Stellbewegung des Stellaktors 11 zu erfassen. Alternativ oder zusätzlich kann in das Abstützlager 18 ein Winkelerfassungssensor 34 integriert sein, der eine Verdrehung des Lagerzapfens 19 und/oder des Stellaktors 11 gegenüber dem Trägerteil 9 erfasst, um die mit einer Stellbewegung des Stellaktors 11 einhergehende Verdrehung des Stellaktors 11 gegenüber dem Trägerteil 9 zu erfassen, welche Verdrehung wiederum ein Maß für die Verdrehung der Lagerringe zueinander ist.

Alternativ oder zusätzlich kann ein Winkelsensor 35 auch unmittelbar die Verdrehung der Lagerringe 7 und 8 zueinander messen, wozu der genannte Winkelsensor 35 den beiden Lagerringen 7 und 8 zugeordnet, beispielsweise in einen der Lagerringe integriert sein kann.

## Patentansprüche

1. Verstelleinheit, insbesondere zum Verstellen eines Pitchwinkels eines Windkraftanlagen-Rotorblatts (5), mit einem Drehlager (6) umfassend zumindest zwei koaxiale, zueinander verdrehbare Lagerringe (7,8), zumindest einem Stellaktor (11) zum Verdrehen der beiden Lagerringe zueinander sowie einer Versorgungseinheit (12) zum Energieversorgen des Stellaktors (11), wobei der zumindest eine Stellaktor (11) und die Versorgungseinheit (12) auf gegenüberliegenden Seiten eines vorzugsweise platten- oder tellerförmigen Stellantrieb-Trägerteils (9) angeordnet sind, das mit einem der Lagerringe (7,8) direkt oder indirekt drehfest verbunden ist und ein drehbares Abstützlager (18) zum drehbaren Abstützen des Stellaktors (11) aufweist, wobei die Versorgungseinheit (12) mit dem Stellaktor (11) durch zumindest einen Druckmittelkanal (22; 23) der durch das Abstützlager (18) hindurchgeführt ist, verbunden ist, **dadurch gekennzeichnet, dass** das Abstützlager (18) eine Druckmittel-Drehdurchführung (29) aufweist, die zwei zueinander verdrehbare Lagerteile umfasst, über deren Schnittstelle hinweg ein Druckmittelkanal (22, 23) verläuft.

2. Verstelleinheit nach dem vorhergehenden Anspruch, wobei eine Energieversorgungs- und/oder Steuerungsverbindung zwischen der Versorgungseinheit (12) und dem Stellaktor (11) schlauch- und kabelfrei ausgebildet ist und ausschließlich durch das drehbare Abstützlager (18) zum drehbaren Abstützen des Stellaktors (11) an dem Stellantriebs-Trägerteil (9) hindurchgeführt ist.

3. Verstelleinheit nach einem der vorhergehenden Ansprüche, wobei die Drehdurchführung (29) einen Lagerzapfen (19) und einen daran drehbar gelagert Stößel (21) umfasst, wobei zumindest ein Druckmittelkanal (23) in dem Stößel (21) und zumindest ein Hydraulikkanal (22) in dem Lagerzapfen (19) miteinander in Strömungsverbindung stehen.

4. Verstelleinheit nach einem der vorhergehenden Ansprüche, wobei die Versorgungseinheit (12) drehfest an dem Trägerteil (9) gelagert und durch die Drehdurchführung (29) an den relativ dazu verdrehbaren Lagerzapfen (19) angeschlossen ist.

5. Verstelleinheit nach einem der vorhergehenden Ansprüche, wobei die Versorgungseinheit (12) mit ihren verschiedenen Komponenten, nämlich einem Elektromotor (15) und/oder einer Pumpe (14) und/oder einem Druckspeicher (13), zu einer vormontierten Baugruppe auf einem Montageträger (31) zusammengefasst und als Einheit an dem Trägerteil (9) oder dem Abstützlager (18) montierbar ist.

6. Verstelleinheit nach einem der vorhergehenden Ansprüche, wobei eine Steuervorrichtung zum Steuern der Stellbewegungen des zumindest einen Stellaktors (11) ein Wegmesssystem (32) zum Erfassen von Stellbewegungen des zumindest einen Stellaktors (11) und/oder davon erzeugten Drehbewegungen aufweist, wobei das genannte Wegmesssystem (32) einen in das Abstützlager (18) integrierten Winkelsensor (34) und/oder einen in den Stellaktor (11) integrierten linearen Wegmesssensor (33) umfasst, wobei eine Signalleitung von dem Winkelsensor (34) und/oder dem Wegmesssensor (33) zu der an der Versorgungseinheit (12) angeordneten Steuervorrichtung durch das Abstützlager (18) hindurchgeführt ist.

7. Verstelleinheit nach einem der vorhergehenden Ansprüche, wobei der zumindest eine Stellaktor (11) einerseits an dem genannten Trägerteil (9), das mit einem der Lagerringe (8) drehfest verbunden ist und sich über eine Lagermitte hinwegerstreckt, gelenkig angelenkt und andererseits an dem anderen der Lagerringe (7) gelenkig angelenkt ist, wobei an dem genannten anderen Lagerring (7) ein die Lagermitte freilassendes Abstützteil (28) vorgesehen ist, das mit dem Lagerring (7) nur im Bereich der Anlenkung des Stellaktors (11) verbunden ist.

8. Verstelleinheit nach einem der vorhergehenden Ansprüche, wobei zumindest zwei Stellaktoren (11) vorgesehen sind, die zueinander gegenläufig angeordnet sind derart, dass zum Verdrehen der beiden Lagerringe (7, 8) zueinander einer der Stellaktoren ausfahrbar und ein anderer der Stellaktoren einfahrbar ist.

9. Verstelleinheit nach einem der vorhergehenden Ansprüche, wobei zumindest zwei Stellaktoren (11) vorgesehen sind, die miteinander gleichsinnig arbeitend angeordnet sind derart, dass zum Verdrehen der beiden Lagerringe (7, 8) zueinander beide Stellaktoren (11) gleichzeitig ausfahrbar und/oder beide Stellaktoren (11) gleichzeitig einfahrbar sind.

10. Windkraftanlage mit einem Rotor (3), der in ihrem Pitchwinkel verstellbare Rotorblätter (5) aufweist, wobei zum Verstellen des Pitchwinkels der Rotorblätter (5) eine Verstelleinheit gemäß einem der vorhergehenden Ansprüche vorgesehen ist.

11. Windkraftanlage nach dem vorhergehenden Anspruch, wobei ein Innenring (7) des Drehlagers (6) mit einem Rotorblatt (5) und ein Aussenring (8) des Drehlagers (6) mit einer Rotornabe drehfest verbunden ist, wobei der genannte Trägerteil (9), an dem der zumindest eine Stellaktor abgestützt ist, mit dem Aussenring (8) des Drehlagers (6) drehfest verbunden ist, und der zumindest eine Stellaktor (11) andererseits an dem Innenring (7) des Drehlagers (6) gelenkig angelenkt ist, wobei an dem genannten Innenring (7) ein die Lagermitte freilassendes Abstützteil (28) vorgesehen ist, das mit dem Innenring (7) nur im Bereich der Anlenkung des Stellaktors (11) verbunden ist.

## Claims

1. An adjustment unit, in particular for adjusting a pitch angle of a wind turbine rotor blade (5), comprising a pivot bearing (6) including at least two coaxial bearing rings (7, 8) that are rotatable with respect to one another, at least one adjustment actuator (11) for rotating the two bearing rings with respect to one another, and a supply unit (12) for supplying the adjustment actuator (11) with energy, wherein the at least one adjustment actuator (11) and the supply unit (12) are disposed on oppositely disposed sides of an adjustment drive carrier part (9) of preferably plate shape or saucer-shape which is directly or indirectly rotatably fixedly connected with one of the bearing rings (7, 8) and has a rotatable support bearing (18) for rotatably supporting the adjustment actuator (11), and wherein the supply unit (12) is connected with the adjustment actuator (11) by at least one pressure media channel (22, 23) passing through the support bearing (18), **characterized in that** the support bearing (18) has a pressure media rotary duct (29) that comprises two bearing parts that are rotatable with respect to one another and over whose interface a pressure media channel (22, 23) runs.

2. An adjustment unit in accordance with the preceding claim, wherein an energy supply connection and/or a control connection between the supply unit (12) and the adjustment actuator (11) is tubeless and cableless and only passes through the rotatable support bearing (18) for the rotatable support of the adjustment actuator (11) on the adjustment drive carrier part (9).

3. An adjustment unit in accordance with one of the preceding claims, wherein the rotatable duct (29) comprises a bearing journal (19) and a push rod (21) rotatably mounted thereon, and wherein at least one pressure media channel (29) in the push rod (21) and at least one hydraulic channel (22) in the bearing journal (19) are in flow communication with one other.

4. An adjustment unit in accordance with one of the preceding claims, wherein the supply unit (12) is rotatably fixedly mounted on the carrier part (9) and is connected by the rotatable duct (29) with the bearing journal (19) that is rotatable relative thereto.

5. An adjustment unit in accordance with one of the preceding claims, wherein the supply unit (12) with its various components, namely an electric motor (15) and/or a pump (14) and/or a pressure accumulator (13), is combined to form a pre-mounted assembly on a mounting support (31) and can be mounted as a unit on the carrier part (9) or on the support bearing (18).

6. An adjustment unit in accordance with one of the preceding claims, wherein a control device for controlling the adjustment movements of the at least one adjustment actuator (11) comprises a distance measuring system (32) for detecting adjustment movements of the at least one adjustment actuator (11) and/or rotational movements generated thereby, wherein said distance measuring system (32) comprises an angle sensor (34) integrated in the support bearing (18) and/or a linear distance measuring sensor integrated in the adjustment actuator (11), and wherein a signal line is led (33) through the support bearing (18) from the angle sensor (34) and/or from the distance measuring sensor (33) to the control device disposed on the supply unit (12).

7. An adjustment unit in accordance with one of the preceding claims, wherein the at least one adjustment actuator (11) is, on the one hand, connected in an articulated manner to said carrier part (9) which is rotatably fixedly connected with one of the bearing rings (8) and extends across a center of a bearing, and is, on the other hand, connected in an articulated manner to the other one of the bearing rings (7), and wherein a support part (28) is provided at said other bearing ring (7) that leaves the center of the bearing open and that is only connected to the bearing ring (7) in the region of the connection of the adjustment actuator (11).

8. An adjustment unit in accordance with one of the preceding claims, wherein at least two adjustment actuators (11) are provided that are arranged in opposite senses to one another such that one of the adjustment actuators can be extended and another one of the adjustment actuators can be retracted to rotate the two bearing rings (7, 8) with respect to one another.

9. An adjustment unit in accordance with one of the preceding claims, wherein at least two adjustment actuators (11) are provided that are arranged to act together in the same sense such that both adjustment actuators (11) can be simultaneously extended and/or both adjustment actuators (11) can be simultaneously retracted to rotate the two bearing rings (7, 8) with respect to one another.

10. A wind turbine having a rotor (3) that comprises rotor blades (5) with adjustable pitch angles, wherein an adjustment unit in accordance with one of the preceding claims is provided to adjust the pitch angle of the rotor blades (5).

11. A wind turbine in accordance with the preceding claim, wherein an inner ring (7) of the pivot bearing (6) is rotatably fixedly connected with a rotor blade (5) and an outer ring (8) of the pivot bearing (6) is rotatably fixedly connected with a rotor hub, wherein said carrier part (9) on which the at least one adjustment actuator is supported is rotatably fixedly connected with the outer ring (8) of the pivot bearing (6), and the at least one adjustment actuator (11) is, on the other hand, connected in an articulated manner to the inner ring (7) of the pivot bearing (6), and wherein a support part (28) that leaves the center of the bearing open and that is only connected with the inner ring (7) in the region of the connection of the adjustment actuator (11) is provided at said inner ring (7).

## Revendications

1. Unité de réglage, en particulier pour régler un angle de calage d'une pale de rotor (5) d'une éolienne, dotée d'un palier rotatif (6) comprenant au moins deux bagues de palier (7, 8) coaxiales, rotatives l'une par rapport à l'autre, d'au moins un actionneur de réglage (11) pour tourner les deux bagues de palier l'une par rapport à l'autre ainsi que d'une unité d'alimentation (12) pour l'alimentation en énergie de l'actionneur de réglage (11), l'au moins un actionneur de réglage (11) et l'unité d'alimentation (12) étant disposés sur des côtés opposés d'une partie support (9) de dispositif d'actionnement de préférence en forme de plaque ou d'assiette, qui est reliée, directement ou indirectement, de manière solidaire en rotation à une des bagues de palier (7, 8) et comporte un palier d'appui (18) rotatif pour l'appui rotatif de l'actionneur de réglage (11), l'unité d'alimentation (12) étant reliée à l'actionneur de réglage (11) par au moins un conduit de fluide sous pression (22 ; 23) qui passe à travers le palier d'appui (18), **caractérisée en ce que** le palier d'appui (18) comporte un raccord tournant (29) pour fluide sous pression, qui comprend deux parties de palier rotatives l'une par rapport à l'autre, un conduit de fluide sous pression (22, 23) s'étendant par-delà leur interface.

2. Unité de réglage selon la revendication précédente, dans laquelle une liaison d'alimentation en énergie et/ou de commande entre l'unité d'alimentation (12) et l'actionneur de réglage (11) est réalisée sans tuyau ni câble, et passe uniquement à travers le palier d'appui (18) rotatif pour l'appui rotatif de l'actionneur de réglage (11) sur la partie support (9) de dispositif d'actionnement.

3. Unité de réglage selon l'une des revendications précédentes, dans laquelle le raccord tournant (29) comprend un tourillon (19) et un poussoir (21) monté rotatif sur celui-ci, au moins un conduit de fluide sous pression (23) dans le poussoir (21) et au moins un conduit hydraulique (22) dans le tourillon (19) étant en liaison d'écoulement l'un avec l'autre.

4. Unité de réglage selon l'une des revendications précédentes, dans laquelle l'unité d'alimentation (12) est montée de manière solidaire en rotation sur la partie support (9) et est reliée au tourillon (19) rotatif par rapport à celle-ci par le biais du raccord tournant (29).

5. Unité de réglage selon l'une des revendications précédentes, dans laquelle l'unité d'alimentation (12), avec ses différents composants, c'est-à-dire un moteur électrique (15) et/ou une pompe (14) et/ou un accumulateur de pression (13), est groupée pour former un ensemble prémonté sur un support de montage (31) et peut être montée comme unité sur la partie support (9) ou le palier d'appui (18).

6. Unité de réglage selon l'une des revendications précédentes, dans laquelle un dispositif de commande destiné à commander les mouvements de réglage de l'au moins un actionneur de réglage (11) comporte un système de mesure de déplacement (32) pour détecter des mouvements de réglage de l'au moins un actionneur de réglage (11) et/ou des mouvements rotatifs générés par celui-ci, ledit système de mesure de déplacement (32) comprenant un capteur angulaire (34) intégré dans le palier d'appui (18) et/ou un capteur de mesure de déplacement (33) linéaire intégré dans l'actionneur de réglage (11), une ligne de signalisation passant du capteur angulaire (34) et/ou du capteur de mesure de déplacement (33) au dispositif de commande disposé sur l'unité d'alimentation (12) à travers le palier d'appui (18).

7. Unité de réglage selon l'une des revendications précédentes, dans laquelle l'au moins un actionneur de réglage (11) est, d'un côté, articulé sur ladite partie support (9), qui est reliée de manière solidaire en rotation à une des bagues de palier (8) et s'étend par-delà un centre du palier, et d'un autre côté, articulé sur l'autre des bagues de palier (7), une partie d'appui (28), laissant libre le centre du palier, étant prévue sur ladite autre bague de palier (7), ladite partie d'appui étant reliée à la bague de palier (7) uniquement dans la zone de l'articulation de l'actionneur de réglage (11).

8. Unité de réglage selon l'une des revendications précédentes, dans laquelle au moins deux actionneurs de réglage (11) sont prévus, qui sont disposés dans des sens opposés l'un par rapport à l'autre de telle manière que, pour tourner les deux bagues de palier (7, 8) l'une par rapport à l'autre, un des actionneurs de réglage peut être sorti et un autre des actionneurs de réglage rentré.

9. Unité de réglage selon l'une des revendications précédentes, dans laquelle au moins deux actionneurs de réglage (11) sont prévus, qui sont disposés fonctionnant dans le même sens l'un par rapport à l'autre de telle manière que, pour tourner les deux bagues de palier (7, 8) l'une par rapport à l'autre, les deux actionneurs de réglage (11) peuvent être sortis simultanément et/ou les deux actionneurs de réglage (11) peuvent être rentrés simultanément.

10. Éolienne comprenant un rotor (3), qui comporte des pales de rotor (5) dont l'angle de calage est réglable, une unité de réglage selon l'une des revendications précédentes étant prévue pour régler l'angle de calage des pales de rotor (5).

11. Éolienne selon la revendication précédente, dans laquelle une bague intérieure (7) du palier rotatif (6) est reliée de manière solidaire en rotation à une pale de rotor (5) et une bague extérieure (8) du palier rotatif (6) est reliée de manière solidaire en rotation à un moyeu de rotor, ladite partie support (9), sur laquelle s'appuie l'au moins un actionneur de réglage, étant reliée de manière solidaire en rotation à la bague extérieure (8) du palier rotatif (6), et l'au moins un actionneur de réglage (11) étant d'autre part articulé sur la bague intérieure (7) du palier rotatif (6), une partie d'appui (28), qui laisse libre le centre du palier, étant prévue sur ladite bague intérieure (7), ladite partie d'appui étant reliée à la bague intérieure (7) uniquement dans la zone de l'articulation de l'actionneur de réglage (11).
